(19) Europäisches Patentamt
European Patent Office
Office européen des brevets

(11) EP 3 778 519 A1

(12) # EUROPEAN PATENT APPLICATION

published in accordance with Art. 153(4) EPC

(43) Date of publication:
**17.02.2021 Bulletin 2021/07**

(21) Application number: **19780633.4**

(22) Date of filing: **01.04.2019**

(51) Int Cl.:
***C03C 27/12*** *(2006.01)* ***B32B 17/10*** *(2006.01)*
***B32B 27/20*** *(2006.01)* ***B32B 27/22*** *(2006.01)*
***B60J 1/00*** *(2006.01)*

(86) International application number:
**PCT/JP2019/014425**

(87) International publication number:
**WO 2019/194113 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.04.2018 JP 2018072496**

(71) Applicant: **SEKISUI CHEMICAL CO., LTD.**
**Osaka-shi**
**Osaka**
**530-8565 (JP)**

(72) Inventor: **SAKAMOTO, Yuu**
**Kouka-shi, Shiga 528-8585 (JP)**

(74) Representative: **Ter Meer Steinmeister & Partner**
**Patentanwälte mbB**
**Nymphenburger Straße 4**
**80335 München (DE)**

(54) **INTERLAYER FILM FOR LAMINATED GLASS, AND LAMINATED GLASS**

(57) Provided is an interlayer film for laminated glass capable of enhancing the rigidity of laminated glass, and lowering the haze value in high temperature environment. An interlayer film for laminated glass according to the present invention is an interlayer film for laminated glass having a one-layer or two or more-layer structure, the interlayer film includes a first layer containing a thermoplastic resin and fumed silica particles, the fumed silica particles include hydrophobic fumed silica particles, and a content of the fumed silica particles in the first layer is 4 parts by weight or more and 60 parts by weight or less per 100 parts by weight of the thermoplastic resin in the first layer.

[FIG. 1.]

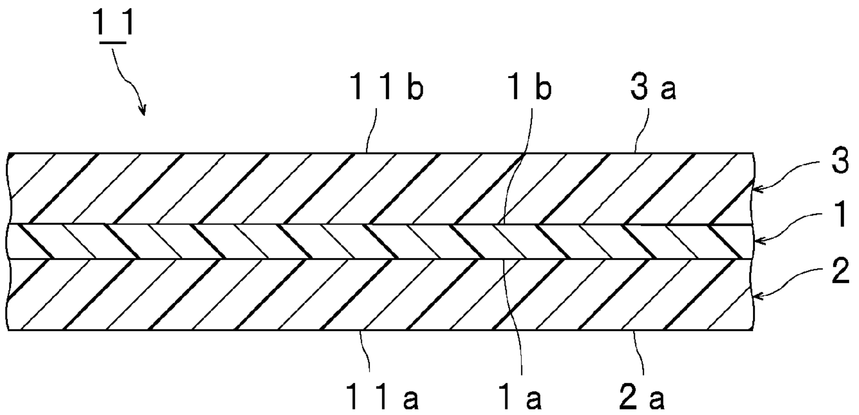


EP 3 778 519 A1

## Description

## TECHNICAL FIELD

The present invention relates to an interlayer film for laminated glass which is used for obtaining laminated glass. Moreover, the present invention relates to a laminated glass prepared with the interlayer film for laminated glass.

## BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.
Examples of the interlayer film for laminated glass include a single-layered interlayer film having a one-layer structure and a multi-layered interlayer film having a two or more-layer structure.
Also, silica particles are sometimes blended in the interlayer film so as to enhance the rigidity of laminated glass.
The following Patent Document 1 discloses an interlayer film containing a thermoplastic polymer and fumed silica that is alkylated. The interlayer film is used for use in multilayer glazing. In Example of Patent Document 1, the fumed silica is used in a relatively small content of 2.0% by weight or less (content of the fumed silica per 100 parts by weight of the thermoplastic polymer is 3.5 parts by weight or less).
The following Patent Document 2 discloses an interlayer film for laminated glass, including a first layer containing a thermoplastic resin, and a second layer containing a thermoplastic resin, the second layer being arranged on a first surface side of the first layer. In the interlayer film for laminated glass, the first layer contains silica particles, the first layer has a glass transition temperature lower than the glass transition temperature of the second layer, and the first layer has a tan$\delta$ at 200°C of 0.8 or more. Patent Document 2 lacks any description about selectively using hydrophobic fumed silica particles as the silica particles. In Example of Patent Document 2, hydrophilic fumed silica and the like is merely used.

### Related Art Documents

### Patent Documents

Patent Document 1: WO 2007/143746 A1
Patent Document 2: WO 2016/039473 A1

## SUMMARY OF THE INVENTION

## PROBLEMS TO BE SOLVED BY THE INVENTION

In a laminated glass prepared with the interlayer film according to Patent Document 1, the rigidity can be enhanced to some extent, but not sufficiently, so that further improvement in rigidity is required.
In a laminated glass prepared with the interlayer film according to Patent Document 2, the rigidity can be enhanced to some extent. However, in the laminated glass prepared with the interlayer film according to Patent Document 2, the haze value in high temperature environment can be high.
In a conventional interlayer film containing silica particles, it is difficult to lower the haze value in high temperature environment, although the haze value in room temperature environment can be lowered.
In a conventional interlayer film containing silica particles, it is difficult to enhance the rigidity of laminated glass, and lower the haze value in high temperature environment.
It is an object of the present invention to provide an interlayer film for laminated glass capable of enhancing the rigidity of laminated glass, and lowering the haze value in high temperature environment. Moreover, the present invention is also aimed at providing laminated glass prepared with the interlayer film for laminated glass.

## MEANS FOR SOLVING THE PROBLEMS

According to a broad aspect of the present invention, there is provided an interlayer film for laminated glass (hereinafter, sometimes described as an interlayer film) that is an interlayer film for laminated glass having a one-layer

or two or more-layer structure, the interlayer film including a first layer containing a thermoplastic resin and fumed silica particles, the fumed silica particles including hydrophobic fumed silica particles, a content of the fumed silica particles in the first layer being 4 parts by weight or more and 60 parts by weight or less per 100 parts by weight of the thermoplastic resin in the first layer.

In a specific aspect of the interlayer film according to the present invention, the hydrophobic fumed silica particles are hydrophobic fumed silica particles surface-treated with a silane coupling agent.

In a specific aspect of the interlayer film according to the present invention, the silane coupling agent is a silane coupling agent having a structure in which three alkyl groups are bonded to one silicon atom.

In a specific aspect of the interlayer film according to the present invention, the silane coupling agent is a silane coupling agent having a trimethylsilyl group.

In a specific aspect of the interlayer film according to the present invention, the first layer contains a plasticizer.

In a specific aspect of the interlayer film according to the present invention, the first layer has a tanδ at 200°C of 0.8 or more.

In a specific aspect of the interlayer film according to the present invention, the first layer has a haze value at 80°C of 3% or less.

In a specific aspect of the interlayer film according to the present invention, the interlayer film includes a second layer, and the second layer is layered on a first surface of the first layer.

In a specific aspect of the interlayer film according to the present invention, the second layer contains a thermoplastic resin.

In a specific aspect of the interlayer film according to the present invention, the second layer contains a plasticizer.

In a specific aspect of the interlayer film according to the present invention, the interlayer film includes a third layer, and the third layer is layered on a second surface opposite to the first surface of the first layer.

In a specific aspect of the interlayer film according to the present invention, the third layer contains a thermoplastic resin.

In a specific aspect of the interlayer film according to the present invention, the third layer contains a plasticizer.

In a specific aspect of the interlayer film according to the present invention, a content of the fumed silica particles in the first layer is 10 parts by weight or more and 60 parts by weight or less per 100 parts by weight of the thermoplastic resin in the first layer.

In a broad aspect of the present invention, there is provided a laminated glass including a first lamination glass member, a second lamination glass member, and the interlayer film for laminated glass described above, the interlayer film for laminated glass being arranged between the first lamination glass member and the second lamination glass member.

## EFFECT OF THE INVENTION

The interlayer film for laminated glass according to the present invention is an interlayer film for laminated glass having a one-layer or two or more-layer structure. In the interlayer film for laminated glass according to the present invention, the interlayer film includes a first layer containing a thermoplastic resin and fumed silica particles, the fumed silica particles include hydrophobic fumed silica particles, a content of the fumed silica particles in the first layer is 4 parts by weight or more and 60 parts by weight or less per 100 parts by weight of the thermoplastic resin in the first layer. In the interlayer film for laminated glass according to the present invention, since the above configuration is provided, it is possible to enhance the rigidity of laminated glass, and it is possible to lower a haze value in high temperature environment.

## BRIEF DESCRIPTION OF DRAWINGS

[Fig. 1] Fig. 1 is a sectional view schematically showing an interlayer film for laminated glass in accordance with a first embodiment of the present invention.

[Fig. 2] Fig. 2 is a sectional view schematically showing an interlayer film for laminated glass in accordance with a second embodiment of the present invention.

[Fig. 3] Fig. 3 is a sectional view schematically showing an example of laminated glass prepared with the interlayer film for laminated glass shown in Fig. 1.

[Fig. 4] Fig. 4 is a sectional view schematically showing an example of laminated glass prepared with the interlayer film for laminated glass shown in Fig. 2.

[Fig. 5] Figs. 5(a) and (b) are examples of photographed images for which flow marks are evaluated.

[Fig. 6] Fig. 6 is an example of a photographed image for which flow marks are evaluated.

[Fig. 7] Figs. 7(a) and (b) are examples of photographed images for which flow marks are evaluated.

## MODES FOR CARRYING OUT THE INVENTION

Hereinafter, the present invention will be described in detail.

The interlayer film for laminated glass (in the present specification, sometimes abbreviated as "the interlayer film") according to the present invention has a one-layer structure or a two or more-layer structure. The interlayer film according to the present invention includes a first layer containing a thermoplastic resin and fumed silica particles. In interlayer film according to the present invention, the fumed silica particles include hydrophobic fumed silica particles. In the interlayer film according to the present invention, a content of the fumed silica particles in the first layer is 4 parts by weight or more and 60 parts by weight or less per 100 parts by weight of the thermoplastic resin in the first layer. When the first layer contains fumed silica particles other than hydrophobic fumed silica particles, the content of the fumed silica particles in the first layer includes the content of fumed silica particles other than hydrophobic fumed silica particles.

In the interlayer film according to the present invention, since the above configuration is provided, it is possible to enhance the rigidity of laminated glass, and it is possible to lower the haze value in high temperature environment.

In a conventional interlayer film containing silica particles, the haze value in high temperature environment (for example, 60°C or more) is sometimes high. In a conventional interlayer film containing silica particles, it is difficult to lower the haze value in high temperature environment, although the haze value in room temperature environment (for example, 10°C to 30°C) can be lowered. In high temperature environment, when the content of silica particles is relatively large, or when the average particle diameter is large, difference in refractive index is likely to occur between the resin part and the silica particle part, so that it is difficult to lower the haze value.

In the interlayer film according to the present invention, since specific fumed silica particles are used as silica particles, it is possible to lower the haze value both in room temperature environment and in high temperature environment. Therefore, in the interlayer film according to the present invention and the laminated glass according to the present invention, it is possible to enhance the transparency of the interlayer film and the laminated glass in a relatively wide temperature region.

In the interlayer film according to the present invention, it is possible to enhance the rigidity such as equivalent rigidity and bending rigidity of the interlayer film and the laminated glass.

Also, in the interlayer film according to the present invention, it is possible to enhance the sound insulating property of the laminated glass.

The interlayer film according to the present invention has a one-layer structure or a two or more-layer structure. The interlayer film according to the present invention may have a one-layer structure and may have a two or more-layer structure. The interlayer film according to the present invention may have a two-layer structure, may have a three-layer structure, or may have a three or more-layer structure. The interlayer film according to the present invention may be a single-layered interlayer film and may be a multi-layered interlayer film.

The interlayer film may include only a first layer, or may include a second layer in addition to the first layer. It is preferred that the interlayer film further include a second layer. When the interlayer film is provided with the second layer, the second layer is arranged on a first surface side of the first layer.

The interlayer film may include a third layer in addition to the first layer and the second layer. It is preferred that the interlayer film further include a third layer. When the interlayer film includes the second layer and the third layer, the third layer is arranged on a second surface side opposite to the first surface of the first layer.

It is preferred that the surface opposite to the first layer side of the second layer be a surface on which a lamination glass member or a glass plate is layered. It is preferred that the thickness of the glass plate layered on the second layer be 3 mm or less. The second surface that is opposite to the first surface (surface of second layer side) of the first layer may be a surface on which a lamination glass member or a glass plate is layered. It is preferred that the thickness of the glass plate layered on the first layer be 3 mm or less. It is preferred that the surface opposite to the first layer side of the third layer be a surface on which a lamination glass member or a glass plate is layered. It is preferred that the thickness of the glass plate layered on the third layer be 3 mm or less.

The interlayer film is arranged between a first glass plate and a second glass plate to suitably obtain laminated glass. Since the rigidity such as equivalent rigidity and bending rigidity can be made sufficiently high owing to the interlayer film, the interlayer film is preferably used for obtaining a laminated glass by being arranged between a first glass plate and a second glass plate using the first glass plate having a thickness of 3 mm or less. Since the rigidity such as equivalent rigidity and bending rigidity can be made sufficiently high owing to the interlayer film, the interlayer film is used more preferably for obtaining a laminated glass by being arranged between a first glass plate and a second glass plate using the first glass plate having a thickness of 3 mm or less and the second glass plate having a thickness of 3 mm or less. The thickness of the first glass plate may be 2 mm or less. The thickness of the second glass plate may be 2 mm or less. The interlayer film is more preferably used for obtaining a laminated glass by being arranged between a first glass

plate and a second glass plate using the first glass plate having a thickness of 2 mm or less, and a second glass plate having a thickness of 2 mm or less.

Hereinafter, specific embodiments of the present invention will be described with reference to the drawings.

Fig. 1 is a schematic section view of an interlayer film for laminated glass in accordance with a first embodiment of the present invention.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 is provided with a first layer 1, a second layer 2 and a third layer 3. The second layer 2 is arranged on a first surface 1a of the first layer 1 to be layered thereon. The third layer 3 is arranged on a second surface 1b at the opposite side of the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

In this connection, other layers may be arranged between the second layer 2 and the first layer 1 and between the first layer 1 and the third layer 3, respectively. It is preferred that the second layer 2 and the first layer 1, and the first layer 1 and the third layer 3 be directly layered. Examples of another layer include a layer containing polyethylene terephthalate and the like.

The first layer 1 contains a thermoplastic resin and fumed silica particles. The fumed silica particles include hydrophobic fumed silica particles. Therefore, the first layer 1 contains a thermoplastic resin and hydrophobic fumed silica particles. The first layer 1 may contain silica particles other than hydrophobic fumed silica particles. It is preferred that the second layer 2 contain a thermoplastic resin. It is preferred that the third layer 3 contain a thermoplastic resin.

Fig. 2 shows an interlayer film for laminated glass in accordance with a second embodiment of the present invention schematically represented as a sectional view.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass. The interlayer film 11A (first layer) contains a thermoplastic resin and fumed silica particles. The fumed silica particles include hydrophobic fumed silica particles. Therefore, the interlayer film 11A (first layer) contains a thermoplastic resin, and hydrophobic fumed silica particles. The interlayer film 11A (first layer) may contain silica particles other than hydrophobic fumed silica particles.

The interlayer film may include a first layer as a layer that is neither an intermediate layer in the interlayer film nor a surface layer in the interlayer film. It is preferred that the interlayer film include a second layer as a surface layer of the interlayer film. It is preferred that the interlayer film be provided with a third layer as a surface layer of the interlayer film.

Hereinafter, the details of the first layer, the second layer and the third layer which constitute the interlayer film according to the present invention, and the details of each ingredient contained in the first layer, the second layer and the third layer will be described.

(Thermoplastic resin)

The first layer contains a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). The thermoplastic resin (1), the thermoplastic resin (2), and the thermoplastic resin (3) may be the same or different from one another. For still higher sound insulating properties, it is preferred that the thermoplastic resin (1) be different from the thermoplastic resin (2) and the thermoplastic resin (3). Each of the polyvinyl acetal resin (1), the polyvinyl acetal resin (2) and the polyvinyl acetal resin (3) may be the same or different from one another. For still higher sound insulating properties, it is preferred that the polyvinyl acetal resin (1) be different from the polyvinyl acetal resin (2) and the polyvinyl acetal resin (3). One kind of each of the thermoplastic resin (1), the thermoplastic resin (2) and the thermoplastic resin (3) may be used alone, and two or more kinds thereof may be used in combination. One kind of each of the polyvinyl acetal resin (1), the polyvinyl acetal resin (2) and the polyvinyl acetal resin (3) may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, and the like. Thermoplastic

resins other than these may be used.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally falls within the range of 70 to 99.9% by mole.

The average polymerization degree of the polyvinyl alcohol (PVA) is preferably 200 or more, more preferably 500 or more, still more preferably 1500 or more, further preferably 1600 or more, especially preferably 2600 or more, most preferably 2700 or more, preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin lie within the range of 3 to 5, and it is preferred that the number of carbon atoms of the acetal group be 4 or 5.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. It is preferred that the aldehyde be acetaldehyde, propionaldehyde, n-butylaldehyde, isobutylaldehyde, n-hexylaldehyde or n-valeraldehyde. It is more preferred that the aldehyde be acetaldehyde, propionaldehyde, n-butyraldehyde, isobutyraldehyde, or n-valeraldehyde. It is further preferred that the aldehyde be n-butyraldehyde or n-valeraldehyde. One kind of the aldehyde may be used alone, and two or more kinds thereof may be used in combination.

A content of the hydroxyl group (the amount of hydroxyl groups) of the polyvinyl acetal resin (1) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the above lower limit or more and the above upper limit or less, it is possible to enhance the sound insulating property of the laminated glass even when the content of the plasticizer in the first layer is reduced, so that the effect of adding the fumed silica particles is further exerted, the rigidity of the laminated glass can be further enhanced, and the haze value in high temperature environment can be further lowered. Moreover, when the content of the hydroxyl group is the above upper limit or less, the flexibility of the interlayer film is enhanced and the handling of the interlayer film is facilitated. In particular, when the content of the hydroxyl group of the polyvinyl acetal resin (1) is 20% by mole or more, the reaction efficiency is high and the productivity is excellent, whereas when the content is 28% by mole or less, the sound insulating property of laminated glass is further enhanced. While a laminated glass prepared with an interlayer film having a content of the hydroxyl group of the polyvinyl acetal resin (1) of 28% by mole or less tends to be low in rigidity such as equivalent rigidity and bending rigidity, the rigidity such as equivalent rigidity and bending rigidity can be significantly ameliorated by containing specific fumed silica particles in the first layer.

Each of the contents of the hydroxyl group of the polyvinyl acetal resin (2) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more and the above upper limit or less, the content of the plasticizer in the second layer and the third layer can be reduced, so that the mechanical strength of the interlayer film is further enhanced. Moreover, when the content of the hydroxyl group is the above upper limit or less, the flexibility of the interlayer film is enhanced and the handling of the interlayer film is facilitated.

From the viewpoint of further enhancing the sound insulating property and the rigidity, it is preferred that the content of the hydroxyl group of the polyvinyl acetal resin (1) be lower than the content of the hydroxyl group of the polyvinyl acetal resin (2). From the viewpoint of further enhancing the sound insulating property and the rigidity, it is preferred that the content of the hydroxyl group of the polyvinyl acetal resin (1) be lower than the content of the hydroxyl group of the polyvinyl acetal resin (3) . From the viewpoint of further enhancing the sound insulating property and the rigidity, the absolute value of difference between the content of the hydroxyl group of the polyvinyl acetal resin (1) and the content of the hydroxyl group of the polyvinyl acetal resin (2) be preferably 1% by mole or more, more preferably 5% by mole or more, further preferably 9% by mole or more, especially preferably 10% by mole or more, most preferably 12% by mole or more. From the viewpoint of further enhancing the sound insulating property and the rigidity, the absolute value of difference between the content of the hydroxyl group of the polyvinyl acetal resin (1) and the content of the hydroxyl group of the polyvinyl acetal resin (3) be preferably 1% by mole or more, more preferably 5% by mole or more, further preferably 9% by mole or more, especially preferably 10% by mole or more, most preferably 12% by mole or

more. The absolute value of difference between the content of the hydroxyl group of the polyvinyl acetal resin (1) and the content of the hydroxyl group of the polyvinyl acetal resin (2) and the absolute value of difference between the content of the hydroxyl group of the polyvinyl acetal resin (1) and the content of the hydroxyl group of the polyvinyl acetal resin (3) are preferably 20% by mole or less. By satisfying the relation in the content of the hydroxyl group, it is possible to enhance the sound insulating property and the rigidity.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in conformity with JIS K6728 "Testing methods for polyvinyl butyral".

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more, and more preferably 0.5% by mole or more and is preferably 10% by mole or less, and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably 47% by mole or more and more preferably 60% by mole or more and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more, and more preferably 60% by mole or more and is preferably 75% by mole or less, and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

From the viewpoint of further improving the penetration resistance of laminated glass, it is preferred that the polyvinyl acetal resin (1) be a polyvinyl acetal resin (A) with an acetylation degree (a) of less than 8% by mole and an acetalization degree (a) of 65% by mole or more or a polyvinyl acetal resin (B) with an acetylation degree (b) of 8% by mole or more. Each of the polyvinyl acetal resin (2) and the polyvinyl acetal resin (3) may be the polyvinyl acetal resin (A) and may be the polyvinyl acetal resin (B) . Each of the polyvinyl acetal resin (2) and the polyvinyl acetal resin (3) may be a polyvinyl acetal resin other than the polyvinyl acetal resin (A) and the polyvinyl acetal resin (B) .

The acetylation degree (a) of the polyvinyl acetal resin (A) is less than 8% by mole, preferably 7.9% by mole or less, more preferably 7.8% by mole or less, further preferably 6.5% by mole or less, especially preferably 6% by mole

or less. The acetylation degree (a) of the polyvinyl acetal resin (A) is preferably 0.1% by mole or more, more preferably 0.5% by mole or more, further preferably 2% by mole or more, especially preferably 5% by mole or more, most preferably 5.5% by mole or more. When the acetylation degree (a) is 0.1% by mole or more and less than 8% by mole, the migration of a plasticizer can be easily controlled and the sound insulating property of the laminated glass is further enhanced.

The acetalization degree (a) of the polyvinyl acetal resin (A) is 65% by mole or more, preferably 66% by mole or more, more preferably 67% by mole or more, further preferably 67.5% by mole or more, especially preferably 75% by mole or more, preferably 85% by mole or less, more preferably 84% by mole or less, further preferably 83% by mole or less and especially preferably 82% by mole or less. When the acetalization degree (a) is the above lower limit or more, the sound insulating properties of laminated glass are further enhanced. When the acetalization degree (a) is the above upper limit or less, the reaction time required for producing the polyvinyl acetal resin (A) can be shortened.

The content (a) of the hydroxyl group of the polyvinyl acetal resin (A) is preferably 18% by mole or more, more preferably 19% by mole or more, further preferably 20% by mole or more, especially preferably 21% by mole or more, most preferably 23% by mole or more. The content (a) of the hydroxyl group of the polyvinyl acetal resin (A) is preferably 31% by mole or less, more preferably 30% by mole or less, further preferably 29% by mole or less, and especially preferably 28% by mole or less. When the content (a) of the hydroxyl group is the above lower limit or more, the adhesion strength of the first layer is further enhanced. When the content (a) of the hydroxyl group is the above upper limit or less, the sound insulating properties of laminated glass are further enhanced.

The acetylation degree (b) of the polyvinyl acetal resin (B) is 8% by mole or more, preferably 9% by mole or more, more preferably 9.5% by mole or more, further preferably 10% by mole or more, especially preferably 10.5% by mole or more, preferably 30% by mole or less, more preferably 28% by mole or less, further preferably 26% by mole or less and especially preferably 24% by mole or less. When the acetylation degree (b) is the above lower limit or more, the sound insulating properties of laminated glass are further enhanced. When the acetylation degree (b) is the above upper limit or less, the reaction time required for producing the polyvinyl acetal resin (B) can be shortened.

The acetalization degree (b) of the polyvinyl acetal resin (B) is preferably 50% by mole or more, more preferably 53% by mole or more, further preferably 55% by mole or more, especially preferably 60% by mole or more, preferably 78% by mole or less, more preferably 75% by mole or less, further preferably 72% by mole or less and especially preferably 70% by mole or less. When the acetalization degree (b) is the above lower limit or more, the sound insulating properties of laminated glass are further enhanced. When the acetalization degree (b) is the above upper limit or less, the reaction time required for producing the polyvinyl acetal resin (B) can be shortened.

The content (b) of the hydroxyl group of the polyvinyl acetal resin (B) is preferably 18% by mole or more, more preferably 19% by mole or more, further preferably 20% by mole or more, especially preferably 21% by mole or more, most preferably 23% by mole or more. The content (b) of the hydroxyl group of the polyvinyl acetal resin (B) is preferably 31% by mole or less, more preferably 30% by mole or less, further preferably 29% by mole or less, and especially preferably 28% by mole or less. When the content (b) of the hydroxyl group is the above lower limit or more, the adhesion strength of the second layer is further enhanced. When the content (b) of the hydroxyl group is the above upper limit or less, the sound insulating properties of laminated glass are further enhanced.

It is preferred that each of the polyvinyl acetal resin (A) and the polyvinyl acetal resin (B) be a polyvinyl butyral resin.

(Plasticizer)

It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or by using a polyvinyl acetal resin and a plasticizer together, the adhesion strength of a layer containing the polyvinyl acetal resin and the plasticizer to a lamination glass member or another layer is moderately enhanced. The plasticizer is not particularly limited. The plasticizer (1), the plasticizer (2) and the plasticizer (3) may be the same or different from one another. One kind of each of the plasticizer (1), the plasticizer (2) and the plasticizer (3) may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an

alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

[Chemical 1]

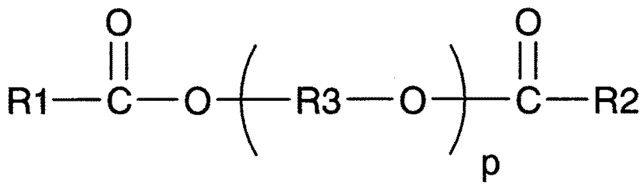

•••(1)

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include di-(2-butoxyethyl)-adipate (DBEA), triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO), triethylene glycol di-2-ethylbutyrate (3GH) or triethylene glycol di-2-ethylpropanoate. It is further preferred that the plasticizer include triethylene glycol di-2-ethylhexanoate, or triethylene glycol di-2-ethylbutyrate. It is especially preferred that the plasticizer include triethylene glycol di-2-ethylhexanoate. The effect of the present invention is effectively exerted by the use of such a preferred plasticizer.

In the first layer, the content of the plasticizer (1) per 100 parts by weight of the thermoplastic resin (1) (100 parts by weight of polyvinyl acetal resin (1) when the thermoplastic resin (1) is a polyvinyl acetal resin (1)) is referred to as a content (1). The content (1) is preferably 50 parts by weight or more, more preferably 55 parts by weight or more, further preferably 60 parts by weight or more, and is preferably 100 parts by weight or less, more preferably 90 parts by weight or less, further preferably 85 parts by weight or less, especially preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

In the second layer, the content of the plasticizer (2) per 100 parts by weight of the thermoplastic resin (2) (100 parts by weight of polyvinyl acetal resin (2) when the thermoplastic resin (2) is a polyvinyl acetal resin (2)) is referred to as a content (2). The content (2) is preferably 10 parts by weight or more, more preferably 15 parts by weight or more, further preferably 20 parts by weight or more, especially preferably 24 parts by weight or more, and is preferably 40 parts by weight or less, more preferably 35 parts by weight or less, further preferably 32 parts by weight or less, especially preferably 30 parts by weight or less. When the content (2) is the above lower limit or more, the flexibility of the interlayer film is enhanced and the handling of the interlayer film is facilitated. When the content (2) is the above upper limit or less, the rigidity such as equivalent rigidity and bending rigidity is further enhanced.

In the third layer, the content of the plasticizer (3) per 100 parts by weight of the thermoplastic resin (3) (100 parts by weight of polyvinyl acetal resin (3) when the thermoplastic resin (3) is a polyvinyl acetal resin (3)) is referred to as a content (3). The content (3) is preferably 10 parts by weight or more, more preferably 15 parts by weight or more, further preferably 20 parts by weight or more, especially preferably 24 parts by weight or more, and is preferably 40 parts by weight or less, more preferably 35 parts by weight or less, further preferably 32 parts by weight or less, especially

preferably 30 parts by weight or less. When the content (3) is the above lower limit or more, the flexibility of the interlayer film is enhanced and the handling of the interlayer film is facilitated. When the content (3) is the above upper limit or less, the rigidity such as equivalent rigidity and bending rigidity is further enhanced.

For the purpose of enhancing the sound insulating properties of laminated glass, it is preferred that the content (1) be larger than the content (2) and it is preferred that the content (1) be larger than the content (3). In particular, while a laminated glass prepared with an interlayer film having the content (1) of 55 parts by weight or more tends to be low in rigidity such as equivalent rigidity and bending rigidity, the rigidity such as equivalent rigidity and bending rigidity can be significantly ameliorated by containing specific fumed silica particles in the first layer.

From the viewpoint of further enhancing the sound insulating property of laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. From the viewpoint of further enhancing the sound insulating property of laminated glass, each of the absolute value of difference between the content (2) and the content (1) and the absolute value of difference between the content (3) and the content (1) is preferably 80 parts by weight or less, more preferably 75 parts by weight or less, and further preferably 70 parts by weight or less.

(Fumed silica particles)

The first layer contains fumed silica particles. The fumed silica particles are classified into hydrophilic fumed silica particles and hydrophobic fumed silica particles. In the present invention, the fumed silica particles contained in the first layer include at least hydrophobic fumed silica particles. Therefore, the first layer contains at least hydrophobic fumed silica particles. The first layer may contain hydrophilic fumed silica particles. By using the hydrophobic fumed silica particles, it is possible to lower the haze value in high temperature environment. Also, by using the hydrophobic fumed silica particles, it is possible to lower the haze value both in room temperature environment and in high temperature environment, and it is possible to enhance the transparency of the interlayer film and the laminated glass in a relatively wide temperature range. Also, use of the hydrophobic fumed silica particles further enhances the rigidity such as equivalent rigidity and bending rigidity and further enhances the adhesion strength between respective layers without lowering the sound insulating property. One kind of the fumed silica particles and hydrophobic fumed silica particles may be used alone or two or more kinds thereof may be used in combination.

The fumed silica particles can be obtained, for example, by hydrolyzing tetrachlorosilane (silicon tetrachloride) at high temperature in oxyhydrogen flame. The fumed silica particles thus obtained are generally hydrophilic fumed silica particles. By surface-treating the fumed silica particles (hydrophilic fumed silica particles) with a surface treating agent such as a silane coupling agent, it is possible to obtain hydrophobic fumed silica particles.

From the viewpoint of further lowering the haze value in high temperature environment, it is preferred that the hydrophobic fumed silica particles be hydrophobic fumed silica particles that have been surface-treated with a silane coupling agent. Also, the hydrophobicity of the fumed silica particles can be enhanced by surface treatment with a silane coupling agent.

Examples of the silane coupling agent include a silane coupling agent having a structure in which one alkyl group is bonded to one silicon atom, a silane coupling agent having a structure in which two alkyl groups are bonded to one silicon atom, and a silane coupling agent having a structure in which three alkyl groups are bonded to one silicon atom. Examples of the silane coupling agent include a silane coupling agent having a structure in which one aromatic ring is bonded to one silicon atom, a silane coupling agent having a structure in which two aromatic rings are bonded to one silicon atom, and a silane coupling agent having a structure in which three aromatic rings are bonded to one silicon atom.

Examples of the silane coupling agent having a structure in which one alkyl group is bonded to one silicon atom include a silane coupling agent having an octylsilyl group.

Examples of the silane coupling agent having a structure in which two alkyl groups are bonded to one silicon atom include a silane coupling agent having a dimethylsilyl group.

Examples of the silane coupling agent having a structure in which three alkyl groups are bonded to one silicon atom include a silane coupling agent having a trimethylsilyl group.

From the viewpoint of increasing tanδ at 200°C of the first layer, and suppressing generation of a flow mark, it is preferred that the silane coupling agent be a silane coupling agent having a structure in which two or more alkyl groups or two or more aromatic rings are bonded to one silicon atom. From the viewpoint of increasing tanδ at 200°C of the first layer, and suppressing generation of a flow mark, it is more preferred that the silane coupling agent be a silane coupling agent having a structure in which three alkyl groups or three aromatic rings are bonded to one silicon atom.

From the viewpoint of further lowering the haze value in high temperature environment, the silane coupling agent is preferably a silane coupling agent having a dimethylsilyl group or a trimethylsilyl group, and is more preferably a silane coupling agent having a trimethylsilyl group.

An average particle diameter of the fumed silica particles and the hydrophobic fumed silica particles is preferably 10 nm or more, more preferably 30 nm or more, further preferably 50 nm or more, and is preferably 1 μm or less, more preferably 0.5 μm or less, further preferably 0.3 μm or less. When the average particle diameter of the fumed silica particles is the above lower limit or more and the above upper limit or less, it is possible to effectively suppress aggregation of the fumed silica particles, and it is possible to enhance the dispersibility of the fumed silica particles. As a result, it is possible to lower the haze value in room temperature environment and in high temperature environment, and it is possible to enhance the transparency of the interlayer film and the laminated glass in a relatively wide temperature range.

As the average particle diameter of the fumed silica particles and the hydrophobic fumed silica particles, a value of median diameter (d50) at which 50% is achieved is adapted. The average particle diameter can be measured with the use of a laser diffraction scattering type particle size distribution measuring apparatus.

The specific surface area by the BET method of the fumed silica particles and the hydrophobic fumed silica particles is preferably 100 $m^2/g$ or more, more preferably 150 $m^2/g$ or more, further preferably 200 $m^2/g$ or more, especially preferably 250 $m^2/g$ or more, most preferably 300 $m^2/g$ or more and is preferably 500 $m^2/g$ or less. The specific surface area can be measured by a gas adsorption method using a specific surface area/fine pore distribution measuring apparatus. Examples of the measuring apparatus include "ASAP 2420" available from SHIMADZU CORPORATION, and the like.

It is preferred that the fumed silica particles and the hydrophobic fumed silica particles be silica particles that are different from silica particles having one hollow part per one silica particle.

From the viewpoint of further lowering the haze value in high temperature environment, the carbon content of the hydrophobic fumed silica particles is preferably 1.0% by weight or more, more preferably 2.0% by weight or more, further preferably 3.0% by weight or more, and is preferably 6.0% by weight or less, more preferably 5.0% by weight or less, further preferably 4.0% by weight or less.

The carbon content of the hydrophobic fumed silica particles is the content of carbon atoms in 100% by weight of the hydrophobic fumed silica particles.

In the first layer, the content of the fumed silica particles per 100 parts by weight of the thermoplastic resin (1) is 4 parts by weight or more and 60 parts by weight or less. In the first layer, the content of the fumed silica particles per 100 parts by weight of the thermoplastic resin (1) is preferably 10 parts by weight or more, more preferably 11 parts by weight or more, further preferably 16 parts by weight or more, and is preferably 40 parts by weight or less, more preferably 30 parts by weight or less. When the content of the fumed silica particles is the above lower limit or more and the above upper limit or less, it is possible to further lower the haze value in high temperature environment. Also, when the content of the fumed silica particles is the above lower limit or more, the adhesion strength between respective layers is further enhanced and the rigidity such as equivalent rigidity and bending rigidity is further enhanced. When the content of the fumed silica particles is the above upper limit or less, the sound insulating property is further enhanced.

In the first layer, the content of the hydrophobic fumed silica particles per 100 parts by weight of the thermoplastic resin (1) is preferably 4 parts by weight or more, more preferably 10 parts by weight or more, further preferably 11 parts by weight or more, especially preferably 16 parts by weight or more, and is preferably 60 parts by weight or less, more preferably 40 parts by weight or less, further preferably 30 parts by weight or less. When the content of the hydrophobic fumed silica particles is the above lower limit or more and the above upper limit or less, it is possible to further lower the haze value in high temperature environment. Also, when the content of the hydrophobic fumed silica particles is the above lower limit or more, the adhesion strength between respective layers is further enhanced and the rigidity such as equivalent rigidity and bending rigidity is further enhanced. When the content of the hydrophobic fumed silica particles is the above upper limit or less, the sound insulating property is further enhanced.

From the viewpoint of further lowering the haze value in high temperature environment, the content of the hydrophobic fumed silica particles in 100% by weight of the fumed silica particles is preferably 80% by weight or more, more preferably 90% by weight or more, further preferably 95% by weight or more, most preferably 100% by weight (whole). Therefore, it is most preferred that the fumed silica particles be hydrophobic fumed silica particles.

(Heat shielding substance)

It is preferred that the interlayer film contain a heat shielding substance. It is preferred that the first layer contain a heat shielding substance. It is preferred that the second layer contain a heat shielding substance. It is preferred that the third layer contain a heat shielding substance. One kind of the heat shielding substance may be used alone, and two or more kinds thereof may be used in combination.

Ingredient X:

It is preferred that the interlayer film include at least one kind of Ingredient X among a phthalocyanine compound, a naphthalocyanine compound, and an anthracyanine compound. It is preferred that the first layer contain the Ingredient

X. It is preferred that the second layer contain the Ingredient X. It is preferred that the third layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of a layer containing the Ingredient X (the first layer, the second layer, or the third layer), the content of the Ingredient X is preferably 0.001% by weight or more, more preferably 0.005% by weight or more, further preferably 0.01% by weight or more, especially preferably 0.02% by weight or more. In 100% by weight of a layer containing the Ingredient X (the first layer, the second layer, or the third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding properties thereof, cesium-doped tungsten oxide particles are especially preferred. With regard to the interlayer film and

laminated glass, from the viewpoint of still further enhancing the heat shielding properties thereof, it is preferred that the cesium-doped tungsten oxide particles be tungsten oxide particles represented by the formula: $Cs_{0.33}WO_3$.

The average particle diameter of the heat shielding particles is preferably 0.01 μm or more, more preferably 0.02 μm or more, and is preferably 0.1 μm or less, more preferably 0.05 μm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of a layer containing the heat shielding particles (the first layer, the second layer, or the third layer), the content of the heat shielding particles is preferably 0.01% by weight or more, more preferably 0.1% by weight or more, further preferably 1% by weight or more, especially preferably 1.5% by weight or more. In 100% by weight of a layer containing the heat shielding particles (the first layer, the second layer, or the third layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

(Metal salt)

It is preferred that the interlayer film contain at least one kind of metal salt (hereinafter, sometimes described as Metal salt M) among an alkali metal salt, an alkaline earth metal salt, and a magnesium salt. It is preferred that the first layer contain the Metal salt M. It is preferred that the second layer contain the Metal salt M. It is preferred that the third layer contain the Metal salt M. By the use of the Metal salt M, controlling the adhesivity between the interlayer film and a lamination glass member or the adhesivity between respective layers in the interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt included in the interlayer film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in a layer containing the Metal salt M (a first layer, a second layer or a third layer) is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the interlayer film and a lamination glass member or the adhesivity between respective layers in the interlayer film can be further well controlled.

(Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure, an ultraviolet ray screening agent having a benzophenone structure, an ultraviolet ray screening agent having a triazine structure, an ultraviolet ray screening agent having a malonic acid ester structure, an ultraviolet ray screening agent having an oxanilide structure, an ultraviolet ray screening agent having a benzoate structure, and the like.

Examples of the ultraviolet ray absorbing agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray absorbing agent having a benzotriazole structure.

Examples of the ultraviolet ray absorbing agent containing a metal oxide include zinc oxide, titanium oxide, cerium oxide, and the like. Furthermore, with regard to the ultraviolet ray absorbing agent containing a metal oxide, the surface thereof may be coated with any material. Examples of the coating material for the surface of the ultraviolet ray absorbing agent containing a metal oxide include an insulating metal oxide, a hydrolyzable organosilicon compound, a silicone compound, and the like.

Examples of the ultraviolet ray absorbing agent having a benzotriazole structure include ultraviolet ray absorbing agents having a benzotriazole structure such as 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.) and 2-(2'-hydroxy-3',5'-di-amylphenyl)benzotriazole ("Tinuvin 328" available from BASF Japan Ltd.). It is preferred that the ultraviolet ray absorbing agent be an ultraviolet ray screening agent having a benzotriazole structure containing a halogen atom, and it is more preferred that the ultraviolet ray screening agent be an ultraviolet ray absorbing agent having a benzotriazole structure containing a chlorine atom, because those are excellent in ultraviolet ray absorbing performance.

Examples of the ultraviolet ray absorbing agent having a benzophenone structure include octabenzone ("Chimassorb 81" available from BASF Japan Ltd.), and the like.

Examples of the ultraviolet ray absorbing agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.) .

Examples of the ultraviolet ray absorbing agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of a layer containing the ultraviolet ray screening agent (the first layer, the second layer, or the third layer), the content of the ultraviolet ray screening agent is preferably 0.1% by weight or more, more preferably 0.2% by weight or more, further preferably 0.3% by weight or more, especially preferably 0.5% by weight or more. In 100% by weight of a layer containing the ultraviolet ray screening agent (the first layer, the second layer, or the third layer), the content of the ultraviolet ray screening agent is preferably 2.5% by weight or less, more preferably 2% by weight or less, further preferably 1% by weight or less, especially preferably 0.8% by weight or less. In 100% by weight of the layer containing the ultraviolet ray screening agent (the first layer, the second layer, or the third layer), when the content of the ultraviolet ray screening agent is the above-described lower limit or more and the above-described upper limit or less, deterioration in visible light transmittance after a lapse of a period can be further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

(Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butylated hydroxyanisole (BHA), 2,6-di-t-butyl-4-ethylphenol, stearyl P-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy)(2-ethylhexyloxy)phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer (the first layer, the second layer, or the third layer) containing the oxidation inhibitor. Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

(Other ingredients)

Each of the first layer, the second layer and the third layer may contain additives such as a coupling agent containing silicon, aluminum or titanium, a dispersing agent, a surfactant, a flame retardant, an antistatic agent, a pigment, a dye, an adhesion strength regulating agent, a moisture-resistance improving agent, a fluorescent brightening agent and an infrared ray absorber, as necessary. One kind of these additives may be used alone, and two or more kinds thereof may be used in combination.

(Other details of interlayer film for laminated glass)

From the viewpoint of enhancing the rigidity of the laminated glass, the equivalent rigidity at 25°C of the interlayer film is preferably 3.0 MPa or more, more preferably 3.5 MPa or more, further preferably 4.0 MPa or more, especially preferably 4.5 MPa or more. The upper limit of the equivalent rigidity at 25°C of the interlayer film is not particularly limited. The equivalent rigidity at 25°C of the interlayer film may be 15 MPa or less, or may be 10 MPa or less.

For enhancing the equivalent rigidity, the degree of crosslinking of the thermoplastic resin in the first layer may be appropriately increased. Furthermore, it is preferred that thickness of each layer be appropriately selected for enhancing the equivalent rigidity.

From the viewpoint of further enhancing the sound insulating property of the laminated glass, the glass transition temperature of the first layer is preferably 15°C or less, more preferably 10°C or less, further preferably 5°C or less, especially preferably 0°C or less. The glass transition temperature of the first layer is preferably -20°C or more.

From the view point of further enhancing the rigidity such as equivalent rigidity and bending rigidity of the laminated glass, it is preferred that the glass transition temperature of the first layer be lower than the glass transition temperature of the second layer and the third layer. Since the first layer having a glass transition temperature lower than that of the second layer and the third layer contains specific fumed silica particles, and the second layer and the third layer having a glass transition temperature higher than that of the first layer are provided, the rigidity such as equivalent rigidity and bending rigidity of the laminated glass is significantly improved. From the viewpoint of further enhancing the rigidity such as equivalent rigidity and bending rigidity of the laminated glass, the absolute value of difference between the glass transition temperature of the first layer and the glass transition temperature of the second layer and the third layer is preferably 10°C or more, more preferably 20°C or more, further preferably 30°C or more, especially preferably 35°C or more. The absolute value of difference between the glass transition temperature of the first layer and the glass

transition temperature of the second layer and the third layer is preferably 70°C or less.

As a method for measuring the glass transition temperature, a method of measuring viscoelasticity by using a viscoelasticity measuring apparatus "DVA-200" available from IT Keisoku Seigyo Company directly after keeping the obtained interlayer film for 12 hours in an environment of room temperature 23 ± 2°C, 25 ± 5% humidity can be recited. It is preferred that the interlayer film be cut out as a piece of 8 mm long and 5 mm wide, and the glass transition temperature be measured in a shear mode in the condition of raising the temperature from -30°C to 100°C at a temperature raising speed of 5°C/minute, and in the condition of 1 Hz frequency and 0.08% strain.

From the viewpoint of enhancing the rigidity such as equivalent rigidity and bending rigidity of the laminated glass, the Young's modulus at 25°C of the first layer is preferably smaller than the Young's modulus at 25°C of the second layer, and is preferably smaller than the Young's modulus at 25°C of the third layer. From the view point of further enhancing the rigidity such as equivalent rigidity and bending rigidity of the laminated glass, it is preferred that the Young's modulus at 25°C of the first layer be smaller than the Young's modulus at 25°C of the second layer and the third layer.

From the viewpoint of enhancing the rigidity such as equivalent rigidity and bending rigidity of the laminated glass, the Young's modulus at 25°C of the first layer is preferably 0.4 MPa or more, more preferably 0.45 MPa or more, further preferably 0.5 MPa or more. The upper limit of the Young's modulus at 25°C of the first layer is not particularly limited. The Young's modulus at 25°C of the first layer may be 5 MPa or less, may be 4 MPa or less, may be 3 MPa or less, or may be 2 MPa or less.

From the viewpoint of enhancing the rigidity such as equivalent rigidity and bending rigidity of the laminated glass, the Young's modulus at 25°C of the second layer and the third layer is preferably 10 MPa or more, more preferably 15 MPa or more, further preferably 20 MPa or more, especially preferably 25 MPa or more. The upper limit of the Young's modulus at 25°C of the second layer and the third layer is not particularly limited. The Young's modulus at 25°C of the second layer and the third layer may be 300 MPa or less, may be 250 MPa or less, or may be 200 MPa or less.

For adjusting the Young's modulus into an appropriate range, the degree of crosslinking of the thermoplastic resin in the first layer may be appropriately increased.

From the viewpoint of suppressing generation of a flow mark, tanδ at 200°C of the first layer is preferably 0.8 or more.

As a method for measuring tanδ at 200°C of the first layer, a method (1) of measuring tanδ at 200°C of the composition for forming the first layer, and a method (2) of measuring tanδ at 200°C of the first layer that is obtained by peeling off the second layer and the third layer from the interlayer film are recited.

As the above method (1), the following method is preferred. The kneaded material of the composition for forming the first layer is press-molded with a press molding machine to prepare a resin film A having a thickness of 0.35 mm. Next, the resin film A is dried in vacuo at 50°C for 2 hours or more, and the viscoelasticity is measured with "Rheometer ARES-G2" available from TA Instruments to determine tanδ at 200°C of the first layer.

As the above method (2), the following method is preferred. In an environment at 23°C, the first layer that is obtained by peeling off the second layer and the third layer from the interlayer film is press molded with a press molding machine at 150°C so that the thickness is 0.35 mm (at 150°C without pressurization for 10 minutes, at 150°C under pressurization for 10 minutes) to prepare a resin film A. Next, the resin film A is dried in vacuo at 50°C for 2 hours or more, and the viscoelasticity is measured with "Rheometer ARES-G2" available from TA Instruments to determine tanδ at 200°C of the first layer.

In the above method (1) and method (2), the geometry of the jig for measurement is parallel plates having a diameter of 8 mm, and the measurement conditions include a temperature: 200°C, a strain: 8%, frequency range: 100 rad/s to 0.1 rad/s, and sweeping starts at 100 rad/s, and a tanδ value at a frequency of 0.1 rad/s is referred to as "tanδ at 200°C".

From the viewpoint of enhancing the transparency of the interlayer film and the laminated glass, the haze value at 20°C of the first layer is preferably 1.0% or less, more preferably 0.8% or less, further preferably 0.6% or less.

From the viewpoint of enhancing the transparency of the interlayer film and the laminated glass in high temperature environment, the haze value at 80°C of the first layer is preferably 3% or less, more preferably 2% or less, further preferably 1% or less.

From the viewpoint of enhancing the transparency of the interlayer film and the laminated glass in room temperature environment and in high temperature environment, the ratio of the haze value at 80°C of the first layer to the haze value at 20°C of the first layer (haze value at 80°C of the first layer/haze value at 20°C of the first layer) is preferably 10 or less, more preferably 6.0 or less, further preferably 2.0 or less, especially preferably 0.5 or less.

From the viewpoint of enhancing the transparency of the interlayer film and the laminated glass, the haze value at 20°C of the interlayer film is preferably 0.8% or less, more preferably 0.6% or less, further preferably 0.5% or less.

From the viewpoint of enhancing the transparency in high temperature environment of the interlayer film and the laminated glass, the haze value at 80°C of the interlayer film is preferably 1.2% or less, more preferably 1.0% or less, further preferably 0.7% or less.

From the viewpoint of enhancing the transparency of the interlayer film and the laminated glass in room temperature environment and in high temperature environment, the ratio of the haze value at 80°C of the interlayer film to the haze value at 20°C of the interlayer film (haze value at 80°C of the interlayer film/haze value at 20°C of the interlayer film) is preferably 12 or less, more preferably 10 or less, further preferably 7 or less, especially preferably 2 or less.

The haze value of the first layer and the interlayer film can be measured at 20°C or 80°C in conformity with JIS K6714. The haze value of the first layer and the interlayer film may be measured while the first layer or the interlayer film is arranged between two sheets of clear glass. It is preferred that the clear glass have a thickness of 2.0 mm.

The interlayer film may be an interlayer film having a uniform thickness, or may be an interlayer film having varying thickness. The sectional shape of the interlayer film may be a rectangular shape and may be a wedge-like shape.

The interlayer film may be wound to be formed into a roll body of the interlayer film. The roll body may include a winding core and the interlayer film wound on the circumference of the winding core.

The distance between one end and the other end of the interlayer film is preferably 3 m or less, more preferably 2 m or less, especially preferably 1.5 m or less, and is preferably 0.5 m or more, more preferably 0.8 m or more, especially preferably 1 m or more.

The thickness of the interlayer film is not particularly limited. From the viewpoint of the practical aspect and the viewpoint of sufficiently enhancing the penetration resistance, and the rigidity such as equivalent rigidity and bending rigidity of the laminated glass, the thickness of the interlayer film is preferably 0.1 mm or more, more preferably 0.25 mm or more, and is preferably 3 mm or less, more preferably 2 mm or less, further preferably 1.5 mm or less. When the thickness of the interlayer film is the above lower limit or more, the penetration resistance, and the rigidity such as equivalent rigidity and bending rigidity of the laminated glass are enhanced. When the thickness of the interlayer film is the above upper limit or less, the transparency of the interlayer film is further improved.

The thickness of the interlayer film is designated as T. The thickness of the first layer is preferably 0.0625T or more, more preferably 0.1T or more, further preferably 0.125T or more, especially 0.128T or more, and is preferably 0.4T or less, more preferably 0.375T or less, further preferably 0.25T or less, further preferably 0.15T or less. When the thickness of the first layer is 0.4T or less, the rigidity such as equivalent rigidity and bending rigidity is further improved.

The thickness of each of the second layer and the third layer is preferably 0.3T or more, more preferably 0.3125T or more, further preferably 0.375T or more, and is preferably 0.9375T or less, more preferably 0.9T or less. The thickness of each of the second layer and the third layer may be 0.46875T or less, and may be 0.45T or less. When the thickness of each of the second layer and the third layer is the above-described lower limit or more and the above-described upper limit or less, the rigidity and the sound insulating property of the laminated glass are further enhanced.

The total thickness of the second layer and the third layer is preferably 0.625T or more, more preferably 0.75T or more, further preferably 0.85T or more, and is preferably 0.9375T or less, more preferably 0.9T or less. When the total thickness of the second layer and the third layer is the above-described lower limit or more and the above-described upper limit or less, the rigidity and the sound insulating property of the laminated glass are further enhanced.

The production method of the interlayer film according to the present invention is not particularly limited. In the case of a single-layered interlayer film, examples of the production method of the interlayer film according to the present invention include a method of extruding a resin composition with an extruder. In the case of a multi-layered interlayer film, examples of the production method of the interlayer film according to the present invention include a method of separately forming resin compositions used for constituting respective layers into respective layers, and then, for example, layering the obtained layers, a method of coextruding resin compositions used for constituting respective layers with an extruder and layering the layers, and the like. A production method of extrusion-molding is preferred because the method is suitable for continuous production.

It is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. It is further preferred that the second layer and the third layer be formed of the same resin composition. In these preferred cases, it is possible to enhance the production efficiency of the interlayer film.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method, an emboss roll method, a calender roll method, and a profile extrusion method. The emboss roll method is preferred because a large number of embosses of the protrusions and recesses, which is a quantitatively constant protrusion and recess pattern, can be formed.

(Laminated glass)

Fig. 3 is a sectional view schematically showing an example of laminated glass prepared with the interlayer film for laminated glass shown in Fig. 1.

The laminated glass 31 shown in Fig. 3 is provided with a first lamination glass member 21, a second lamination glass member 22 and an interlayer film 11. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of the second layer 2. The second lamination glass member 22 is layered on an outer surface 3a of a third layer 3.

Fig. 4 is a sectional view schematically showing an example of laminated glass prepared with the interlayer film for laminated glass shown in Fig. 2.

The laminated glass 31A shown in Fig. 4 is provided with a first lamination glass member 21, a second lamination glass member 22 and an interlayer film 11A. The interlayer film 11A is arranged between the first lamination glass member 21 and the second lamination glass member 22 to be sandwiched therebetween.

The first lamination glass member 21 is layered on a first surface 11a of the interlayer film 11A. The second lamination glass member 22 is layered on a second surface 11b opposite to the first surface 11a of the interlayer film 11A.

As described above, the laminated glass according to the present invention includes a first lamination glass member, a second lamination glass member, and an interlayer film, and the interlayer film is the interlayer film for laminated glass according to the present invention. In the laminated glass according to the present invention, the above-mentioned interlayer film is arranged between the first lamination glass member and the second lamination glass member.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, preferably 5 mm or less and more preferably 3 mm or less. Moreover, when the lamination glass member is a glass plate, the thickness of the glass plate is preferably 0.5 mm or more, more preferably 0.7 mm or more, preferably 5 mm or less and more preferably 3 mm or less. When the lamination glass member is a PET film, the thickness of the PET film is preferably 0.03 mm or more and is preferably 0.5 mm or less.

By using the interlayer film according to the present invention, it is possible to keep the rigidity such as equivalent rigidity and bending rigidity of the laminated glass high even when the thickness of the laminated glass is small. The thickness of the glass plate is preferably 2 mm or less, more preferably 1.8 mm or less, still more preferably 1.5 mm or less, further preferably 1 mm or less, still further preferably 0.8 mm or less, especially preferably 0.7 mm or less. When the thickness of the glass plate is the above upper limit or less, it is possible to reduce the weight of the laminated glass, and it is possible to reduce the environmental load by reducing the material of the laminated glass, and it is possible to reduce the environmental load by ameliorating the fuel consumption of an automobile by weight reduction of the laminated glass.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first lamination glass member and the interlayer film, and between the second lamination glass member and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained. At the time of producing the laminated glass, a first layer, a second layer and a third layer may be layered.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for building respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

From the viewpoint of obtaining laminated glass further excellent in transparency, the visible light transmittance of laminated glass is preferably 65% or more and more preferably 70% or more. The visible light transmittance of laminated glass can be measured in accordance with JIS R3211:1998. It is preferred that the visible light transmittance of laminated glass obtained by sandwiching the interlayer film for laminated glass according to the present invention between two sheets of green glass (heat ray-absorbing plate glass) with a thickness of 2 mm in accordance with JIS R3208 be 70% or more. The visible light transmittance is more preferably 75% or more.
Hereinafter, the present invention will be described in more detail with reference to examples. The present invention is not limited only to these examples.
The following materials were prepared.

(Polyvinyl acetal resin)

Polyvinyl acetal resins shown in the following Tables 1, 2 were appropriately used. In all polyvinyl acetal resins used, n-butyraldehyde which has 4 carbon atoms is used for the acetalization.
With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

(Plasticizer)

Triethylene glycol di-2-ethylhexanoate (3GO)

(Fumed silica particles)

Hydrophobic fumed silica particles (a) ("AEROSIL RX300" available from NIPPON AEROSIL, specific surface area according to BET method: 200 $\pm$ 20 $m^2/g$, average particle diameter: 0.1 $\mu m$, carbon content: 3.0% to 5.0%, hydrophobic fumed silica particles surface-treated with silane coupling agent having trimethylsilyl group)
Hydrophobic fumed silica particles (b) ("AEROSIL R812" available from NIPPON AEROSIL, specific surface area according to BET method: 260 $\pm$ 30 $m^2/g$, average particle diameter: 0.1 $\mu m$, carbon content: 2.0% to 3.0%, hydrophobic fumed silica particles surface-treated with silane coupling agent having trimethylsilyl group)
Hydrophobic fumed silica particles (c) ("AEROSIL R976" available from NIPPON AEROSIL, specific surface area according to BET method: 250 $\pm$ 25 $m^2/g$, average particle diameter: 0.1 $\mu m$, carbon content: about 1.6%, hydrophobic fumed silica particles surface-treated with silane coupling agent having dimethylsilyl group)
Hydrophilic fumed silica particles (d) ("AEROSIL 380" available from NIPPON AEROSIL, specific surface area according to BET method: 380 $\pm$ 30 $m^2/g$, average particle diameter: 0.1 $\mu m$)

(Silica particles other than fumed silica particles)

Hydrophilic silica particles (A) ("SYLYSIA 310P" available from FUJI SILYSIA CHEMICAL LTD., specific surface area according to BET method: 300 $\pm$ 50 $m^2/g$, average particle diameter: 2.5 $\mu m$)

(Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

(Oxidation inhibitor)

BHT (2,6-di-t-butyl-p-cresol)

(Example 1)

Preparation of composition for forming first layer:

The following ingredients were mixed to obtain a composition for forming a first layer.
Polyvinyl acetal resins shown in the following Table 1 100 parts by weight

Plasticizer (3GO) 75 parts by weight
Hydrophobic fumed silica particles(a) 20 parts by weight
Ultraviolet ray screening agent (Tinuvin326) in an amount of 0.2% by weight in the obtained first layer
Oxidation inhibitor (BHT) in an amount of 0.2% by weight in the obtained first layer

Preparation of composition for forming second layer and third layer:

The following ingredients were mixed to obtain a composition for forming a second layer and a third layer.
Polyvinyl acetal resins shown in the following Table 1 100 parts by weight

Plasticizer (3GO) 30.8 parts by weight
Ultraviolet ray screening agent (Tinuvin 326) in amount of 0.2% by weight in the obtained second layer and third layer
Oxidation inhibitor (BHT) in an amount of 0.2% by weight in the obtained second layer and third layer

Preparation of interlayer film:

By coextruding the composition for forming a first layer and the composition for forming a second layer and a third layer using a coextruder, an interlayer film (800 μm in thickness) having a layered structure of second layer (360 μm in thickness)/first layer (80 μm in thickness)/third layer (360 μm in thickness) was prepared.

(Examples 2 to 6 and Comparative Examples 1 to 5)

An interlayer film and a laminated glass were obtained in the same manner as that in Example 1 except that the kinds and blending amounts of the polyvinyl acetal resin and the silica particles to be used in the composition for forming a first layer and the composition for forming a second layer and a third layer were set to those listed in the following Tables 1, 2. In Examples 2 to 6 and Comparative Examples 1 to 5, the same kinds of the ultraviolet ray screening agent and the oxidation inhibitor as those in Example 1 were blended in the same blending amounts (the amount of 0.2% by weight in the obtained first layer, the amount of 0.2% by weight in the obtained second layer and third layer, namely the amount of 0.2% by weight in the obtained interlayer film) as those in Example 1.

(Evaluation)

(1) Haze value of the first layer (transparency)

The composition for forming a first layer was mixed and press-molded at 150°C to obtain a molded body (first layer) having a thickness of 800 μm. For the obtained molded body (first layer), haze values at 20°C and 80°C were measured using a haze meter ("TC-HIIIDPK" available from Tokyo Denshoku Co., Ltd.) in accordance with JIS K6714. Also, from the obtained haze values at 20°C and 80°C, the ratio of the haze value at 80°C of the first layer to the haze value at 20°C of the first layer (haze value at 80°C of first layer/haze value at 20°C of first layer) was determined.

(2) Young's modulus of first layer

The composition for forming a first layer was mixed and press-molded at 150°C to obtain a molded body (first layer) having a thickness of 800 μm. The obtained molded body was subjected to punching with a super dumbbell cutter: SDK-600 available from DUMBBELL CO., LTD. to obtain a test specimen. The test specimens obtained were stored for 12 hours at 23°C and humidity of 30%RH. Then, using TENSILON available from A&D Company, Limited in a constant temperature room at 25°C, a test specimen was subjected to a tension test at 200 mm/min. The inclination in the infinitesimal strain region of the obtained stress-strain curve was calculated as Young's modulus. In an environment at 23°C, the first layer obtained by peeling off the second layer and the third layer from the interlayer film may be press-molded at 150°C to have a thickness of 800 μm, and then punched with a super dumbbell cutter: SDK-600 available from DUMBBELL CO., LTD. to obtain a test specimen. The condition of the press-molding is preferably 150°C for 10 minutes without pressurization, and 150°C for 10 minutes under pressurization.
Specifically, the composition for forming a first layer was mixed and press-molded at 150°C to obtain a molded body (first layer) having a thickness of 800 μm. The obtained molded body was subjected to punching with a super dumbbell cutter: SDK-600 available from DUMBBELL CO., LTD. to obtain a test specimen having a total length of 120 mm. The test specimens obtained were stored for 12 hours at 23°C and humidity of 30%RH. The positions of 40 mm from each end of the test specimen were marked with gauge marks (gauge length: 40 mm), and the thickness of the test specimen between the gauge marks was measured. The thickness of the test specimen in each gauge mark part,

and the thickness of the test specimen at the midpoint between the two gauge marks were measured, and an average value of the thicknesses was regarded as a thickness between gauge marks. The thickness was measured with "Digimatic Indicator" (ID-C112C) available from Mitutoyo Corporation. Then, using TENSILON "RTE-1210" available from A&D Company, Limited in a constant temperature room at 25°C, a test specimen was subjected to a tension test at 200 mm/min, with a chuck distance of 7 cm. The stress and strain were calculated according to the following formula.

Stress = load/initial cross section between gauge marks

Strain = (increment in chuck distance/initial gauge length) × 100

The inclination at strains of 0 to 10% of the obtained stress-strain curve was defined as Young's modulus.

(3) Equivalent rigidity

Respective compositions for forming a first layer, a second layer and a third layer were mixed, and press-molded at 150°C to obtain respective molded bodies having a thickness of 800 μm. The obtained molded body was subjected to punching with a super dumbbell cutter: SDK-600 available from DUMBBELL CO., LTD. to obtain a test specimen. The test specimens obtained were stored for 12 hours at 23°C and humidity of 30%RH. Then, using TENSILON available from A&D Company, Limited in a constant temperature room at 25°C, a test specimen was subjected to a tension test at 200 mm/min. The inclination in the infinitesimal strain region of the obtained stress-strain curve was calculated as Young's modulus. Specifically, measurement was conducted in the same manner as the measurement of the Young's modulus of the first layer except that the inclination at strains of 0 to 3% was defined as Young's modulus.

In an environment at 23°C, the first layer obtained by peeling off the second layer and the third layer from the interlayer film, the second layer and the third layer may be press-molded at 150°C to have a thickness of 800 μm, and then punched with a super dumbbell cutter: SDK-600 available from DUMBBELL CO., LTD. to obtain a test specimen. The condition of the press-molding is, for example, 150°C for 10 minutes without pressurization, and then 150°C for 10 minutes under pressurization.

From the Young's modulus and the thickness of each of the first layer, the second layer and the third layer, equivalent rigidity E* of the interlayer film was calculated by the formula (X). Thickness of each of the first layer, the second layer and the third layer was measured by observing the cross section of the first layer, the second layer and the third layer under an optical microscope.

Formula (X): $E^* = (\Sigma i a_i)/(\Sigma i a_i/E_i)$

In the formula (X), Ei represents a Young's modulus of the film of the i-th layer, and ai represents a thickness of the film of the i-th layer. Σi means calculating the sum of the values of i layers.

[Criteria for judgment in equivalent rigidity]

○: Equivalent rigidity is 3.5 MPa or more
×: Equivalent rigidity is less than 3.5 MPa

(4) Tanδ at 200°C of first layer

A kneaded material of the composition for forming a first layer was prepared. The obtained kneaded material was press-molded with a press molding machine to obtain a resin film A having a thickness of 0.35 mm. The obtained resin film A was dried in vacuo at 50°C for two or more hours. Viscoelasticity was measured with "Rheometer ARES-G2" available from TA Instruments. The geometry of the jig for measurement is parallel plates having a diameter of 8 mm, and the measurement conditions include a temperature: 200°C, a strain: 8%, frequency range: 100 rad/s to 0.1 rad/s, and sweeping started at 100 rad/s. The value of tanδ at a frequency of 0.1 rad/s was defined as "tanδ at 200°C".

In an environment at 23°C, the first layer that is obtained by peeling off the second layer and the third layer from the interlayer film may be press-molded at 150°C so that the thickness is 0.35 mm (at 150°C without pressurization for 10 minutes, at 150°C under pressurization for 10 minutes) to prepare a resin film A.

(5) Dispersibility of silica particles

The obtained interlayer film was cut into a size of 15 cm long × 30 cm wide. Then, clear float glass (15 cm long × 30 cm wide × 2.5 mm thick) was prepared. Between two sheets of the clear float glass, the obtained interlayer film was sandwiched, and vacuum-pressed by retention at 90°C for 30 minutes with a vacuum laminator, to obtain a laminate. In the laminate, the part of the interlayer film protruding from the glass plate was cut off, to obtain a laminated glass.
The laminated glass was arranged between a light source and a screen so that the distance between the light source and the screen was 200 cm, and the distance between the light source and the interlayer film was 180 cm. As the light source, S-Light available from NIPPON GIJUTSU CENTER Co., Ltd, was used. Arrangement was made so that the light enters the surface of the laminated glass perpendicularly. The image projected on the screen was visually observed. Dispersibility of the silica particles was judged according to the following criteria.

[Criteria for judgment in dispersibility of silica particles]

○: Particulate shadow is not clearly observed
×: Particulate shadow is observed

(6) Sound insulating property

The obtained interlayer film was cut into a size of 30 cm long × 2.5 cm wide. Next, the interlayer film was sandwiched between two sheets of green glass conforming to JIS R3208 (30 cm long × 2.5 cm wide × 2 mm thick) to obtain a laminate. The laminate was put into a rubber bag and the interior of the bag was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a sheet of laminated glass.
The obtained laminated glass was excited with a vibration generator for damping test ("Vibrator G21-005D" available from Shinken. Co., Ltd.). The resultant vibration characteristic was amplified with a mechanical impedance measuring device ("XG-81" available from RION Co., Ltd.), and the vibration spectrum was analyzed with a FFT spectrum analyzer ("FFT analyzer HP3582A" available from Yokogawa Hewlett Packard).
From a ratio between a loss factor obtained in this manner and a resonance frequency of the laminated glass, a graph showing the relation between the sound frequency (Hz) and the sound transmission loss (dB) at 20°C was prepared, and the minimal sound transmission loss (TL value) at a sound frequency around 2,000 Hz was determined. The higher the TL value, the more the sound insulating property is enhanced. The sound insulating property was judged according to the following criteria.

[Criteria for judgment in sound insulating property]

○: TL value is 35 dB or more
×: TL value is less than 35 dB

(7) Flow mark

The obtained interlayer film was cut into a size of 15 cm long × 30 cm wide. Then, clear float glass (15 cm long × 30 cm wide × 2.5 mm thick) was prepared. Between two sheets of the clear float glass, the obtained interlayer film was sandwiched, and vacuum-pressed by retention at 90°C for 30 minutes with a vacuum laminator, to obtain a laminate. In the laminate, the part of the interlayer film protruding from the glass plate was cut off, to obtain a laminated glass.
The laminated glass was arranged between a light source and a screen so that the distance between the light source and the screen was 200 cm, and the distance between the light source and the interlayer film was 180 cm. As the light source, S-Light available from NIPPON GIJUTSU CENTER Co., Ltd, was used. Arrangement was made so

that the light enters the surface of the laminated glass perpendicularly. The image projected on the screen was photographed with a camera. The flow mark was judged according to the following criteria.

[Criteria for judgement in flow mark]

○: Striped unevenness (flow mark) is not clearly observed
Δ: Striped unevenness (flow mark) is slightly observed
×: Striped unevenness (flow mark) is observed

Examples of photographed images judged as ○ are shown in Figs. 5(a) and (b), an example of a photographed image judged as Δ is shown in Fig. 6, and examples of photographed images judged as × are shown in Figs. 7(a) and (b).
The details and the results are shown in the following Tables 1, 2. In this connection, in the following Tables 1, 2, the description of ingredients to be blended other than the polyvinyl acetal resin, the plasticizer and the silica particles was omitted.

[Table 1]

| | | | | | Example 1 | Example 2 | Example 3 | Example 4 | Example 5 | Example 6 |
|---|---|---|---|---|---|---|---|---|---|---|
| Composition of first layer | Thickness | | | μm | 80 | 80 | 80 | 80 | 80 | 80 |
| | Polyvinyl acetal resin | | Average polymerization degree | - | 1700 | 1700 | 1700 | 1700 | 1700 | 1700 |
| | | | Content of hydroxyl group | % by mole | 23.1 | 23.1 | 23.1 | 23.1 | 23.1 | 23.1 |
| | | | Acetylation degree | % by mole | 12.5 | 12.5 | 12.5 | 12.5 | 12.5 | 12.5 |
| | | | Acetalization degree | % by mole | 64.5 | 64.5 | 64.5 | 64.5 | 64.5 | 64.5 |
| | | | Content | parts by weight | 100 | 100 | 100 | 100 | 100 | 100 |
| | Plasticizer | | Kind | - | 3GO | 3GO | 3GO | 3GO | 3GO | 3GO |
| | | | Content | parts by weight | 75 | 75 | 75 | 75 | 75 | 75 |
| | Silica particles | Fumed silica particles | Kind | - | a<br>Hydrophobic | b<br>Hydrophobic | b<br>Hydrophobic | b<br>Hydrophobic | b<br>Hydrophobic | c<br>Hydrophobic |
| | | | Average particle diameter | μm | 0.1 | 0.1 | 0.1 | 0.1 | 0.1 | 0.1 |
| | | | Content | parts by weight | 20 | 5 | 10 | 20 | 50 | 20 |
| | | Silica particles other than fumed silica particles | Kind | - | - | - | - | - | - | - |
| | | | Average particle diameter | μm | - | - | - | - | - | - |
| | | | Content | parts by weight | - | - | - | - | - | - |
| Composition of second and third layers | Individual thickness | | | μm | 360 | 360 | 360 | 360 | 360 | 360 |
| | Polyvinyl acetal resin | | Average polymerization degree | - | 1700 | 1700 | 1700 | 1700 | 1700 | 1700 |
| | | | Content of hydroxyl group | % by mole | 34.5 | 34.5 | 34.5 | 34.5 | 34.5 | 34.5 |
| | | | Acetylation degree | % by mole | 0.8 | 0.8 | 0.8 | 0.8 | 0.8 | 0.8 |
| | | | Acetalization degree | % by mole | 64.7 | 64.7 | 64.7 | 64.7 | 64.7 | 64.7 |
| | | | Content | parts by weight | 100 | 100 | 100 | 100 | 100 | 100 |
| | Plasticizer | | Kind | - | 3GO | 3GO | 3GO | 3GO | 3GO | 3GO |
| | | | Content | parts by weight | 30.8 | 30.8 | 30.8 | 30.8 | 30.8 | 30.8 |
| Evaluation | Haze value of first layer | Haze value at 20°C | | % | 1.36 | 0.6 | 0.79 | 1.23 | 2.60 | 0.71 |
| | | Haze value at 80°C | | % | 0.38 | 0.35 | 0.33 | 0.30 | 0.42 | 0.47 |
| | | Ratio (haze value at 80°C/haze value at 20°C) | | - | 0.28 | 0.58 | 0.42 | 0.24 | 0.16 | 0.66 |
| | Young's modulus of first layer | | | MPa | 0.51 | 0.39 | 0.43 | 0.51 | 0.75 | 0.57 |
| | Equivalent rigidity | | | MPa | 4.51 | 3.54 | 3.87 | 4.51 | 6.29 | 4.97 |
| | | | | - | ○ | ○ | ○ | ○ | ○ | ○ |
| | Tanδ at 200°C of first layer | | | - | 1.74 | 1.78 | 1.69 | 1.50 | 0.95 | 0.71 |
| | Dispersibility of silica particles | | | - | ○ | ○ | ○ | ○ | ○ | ○ |
| | Sound insulating property: TL method | | | - | ○ | ○ | ○ | ○ | ○ | ○ |
| | Flow mark | | | - | ○ | ○ | ○ | ○ | ○ | △ |

[Table 2]

| | | | | | Comparative Example 1 | Comparative Example 2 | Comparative Example 3 | Comparative Example 4 | Comparative Example 5 |
|---|---|---|---|---|---|---|---|---|---|
| Composition of first layer | Thickness | | | μm | 80 | 80 | 80 | 80 | 80 |
| | Polyvinyl acetal resin | | Average polymerization degree | - | 1700 | 1700 | 1700 | 1700 | 1700 |
| | | | Content of hydroxyl group | % by mole | 23.1 | 23.1 | 23.1 | 23.1 | 23.1 |
| | | | Acetylation degree | % by mole | 12.5 | 12.5 | 12.5 | 12.5 | 12.5 |
| | | | Acetalization degree | % by mole | 64.5 | 64.5 | 64.5 | 64.5 | 64.5 |
| | | | Content | parts by weight | 100 | 100 | 100 | 100 | 100 |
| | Plasticizer | | Kind | - | 3GO | 3GO | 3GO | 3GO | 3GO |
| | | | Content | parts by weight | 75 | 75 | 75 | 75 | 75 |
| | Silica particles | Fumed silica particles | Kind | - | - | - | d | b | b |
| | | | | | - | - | Hydrophilic | Hydrophobic | Hydrophobic |
| | | | Average particle diameter | μm | - | - | 0.1 | 0.1 | 0.1 |
| | | | Content | parts by weight | - | - | 20 | 2 | 80 |
| | | Silica particles other than fumed silica particles | Kind | - | - | A | - | - | - |
| | | | Average particle diameter | μm | - | 2.5 | - | - | - |
| | | | Content | parts by weight | - | 20 | - | - | - |
| Composition of second and third layers | Individual thickness | | | μm | 360 | 360 | 360 | 360 | 360 |
| | Polyvinyl acetal resin | | Average polymerization degree | - | 1700 | 1700 | 1700 | 1700 | 1700 |
| | | | Content of hydroxyl group | % by mole | 34.5 | 34.5 | 34.5 | 34.5 | 34.5 |
| | | | Acetylation degree | % by mole | 0.8 | 0.8 | 0.8 | 0.8 | 0.8 |
| | | | Acetalization degree | % by mole | 64.7 | 64.7 | 64.7 | 64.7 | 64.7 |
| | | | Content | parts by weight | 100 | 100 | 100 | 100 | 100 |
| | Plasticizer | | Kind | - | 3GO | 3GO | 3GO | 3GO | 3GO |
| | | | Content | parts by weight | 30.8 | 30.8 | 30.8 | 30.8 | 30.8 |
| Evaluation | Haze value of first layer | Haze value at 20°C | | % | 0.34 | 1.48 | 0.75 | 0.40 | 3.90 |
| | | Haze value at 80°C | | % | 0.36 | 23.59 | 9.11 | 0.36 | 0.50 |
| | | Ratio (haze value at 80°C/haze value at 20°C) | | - | 1.06 | 15.94 | 12.15 | 0.90 | 0.13 |
| | Young's modulus of first layer | | | MPa | 0.35 | 0.72 | 0.82 | 0.37 | 0.99 |
| | Equivalent rigidity | | | MPa | 3.21 | 6.08 | 6.77 | 3.38 | 7.89 |
| | | | | - | × | ○ | ○ | × | ○ |
| | Tanδ at 200°C of first layer | | | - | 1.87 | 1.95 | 0.82 | 1.83 | 0.40 |
| | Dispersibility of silica particles | | | - | - | × | × | ○ | × |
| | Sound insulating property: TL method | | | - | ○ | ○ | ○ | ○ | × |
| | Flow mark | | | - | ○ | ○ | △ | ○ | × |

## EXPLANATION OF SYMBOLS

1: First layer
1a: First surface
1b: Second surface
2: Second layer
2a: Outer surface
3: Third layer
3a: Outer surface
11: Interlayer film
11A: Interlayer film (first layer)
11a: First surface
11b: Second surface
21: First lamination glass member
22: Second lamination glass member
31: Laminated glass
31A: Laminated glass

## Claims

**1.** An interlayer film for laminated glass having a one-layer or two or more-layer structure,
the interlayer film including a first layer containing a thermoplastic resin and fumed silica particles,
the fumed silica particles including hydrophobic fumed silica particles,
a content of the fumed silica particles in the first layer being 4 parts by weight or more and 60 parts by weight or less per 100 parts by weight of the thermoplastic resin in the first layer.

**2.** The interlayer film for laminated glass according to claim 1, wherein the hydrophobic fumed silica particles are hydrophobic fumed silica particles surface-treated with a silane coupling agent.

**3.** The interlayer film for laminated glass according to claim 2, wherein the silane coupling agent is a silane coupling agent having a structure in which three alkyl groups are bonded to one silicon atom.

**4.** The interlayer film for laminated glass according to claim 2 or 3, wherein the silane coupling agent is a silane coupling agent having a trimethylsilyl group.

**5.** The interlayer film for laminated glass according to any one of claims 1 to 4, wherein the first layer contains a plasticizer.

**6.** The interlayer film for laminated glass according to any one of claims 1 to 5, wherein the first layer has a tanδ at 200°C of 0.8 or more.

**7.** The interlayer film for laminated glass according to any one of claims 1 to 6, wherein the first layer has a haze value at 80°C of 3% or less.

**8.** The interlayer film for laminated glass according to any one of claims 1 to 7, wherein
the interlayer film includes a second layer, and
the second layer is layered on a first surface of the first layer.

**9.** The interlayer film for laminated glass according to claim 8, wherein the second layer contains a thermoplastic resin.

**10.** The interlayer film for laminated glass according to claim 8 or 9, wherein the second layer contains a plasticizer.

**11.** The interlayer film for laminated glass according to any one of claims 8 to 10, wherein
the interlayer film includes a third layer, and
the third layer is layered on a second surface opposite to the first surface of the first layer.

**12.** The interlayer film for laminated glass according to claim 11, wherein the third layer contains a thermoplastic resin.

**13.** The interlayer film for laminated glass according to claim 11 or 12, wherein the third layer contains a plasticizer.

**14.** The interlayer film for laminated glass according to any one of claims 1 to 13, wherein the content of the fumed silica particles in the first layer is 10 parts by weight or more and 60 parts by weight or less per 100 parts by weight of the thermoplastic resin in the first layer.

**15.** A laminated glass, comprising:

a first lamination glass member;
a second lamination glass member; and
the interlayer film for laminated glass according to any one of claims 1 to 14,
the interlayer film for laminated glass being arranged between the first lamination glass member and the second lamination glass member.

[FIG. 1.]

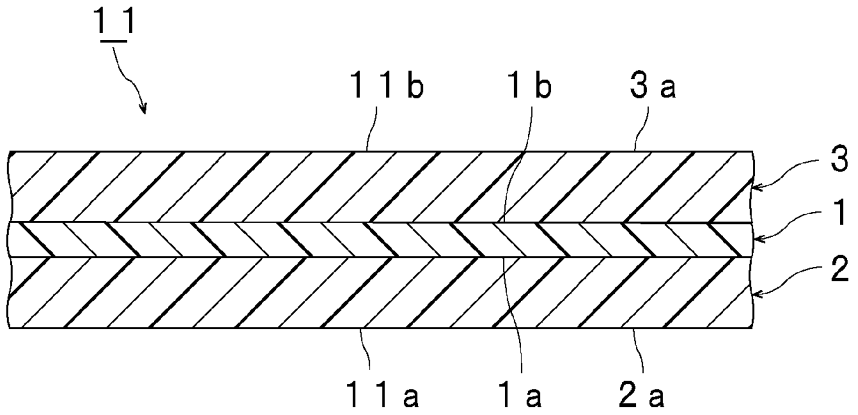


[FIG. 2.]

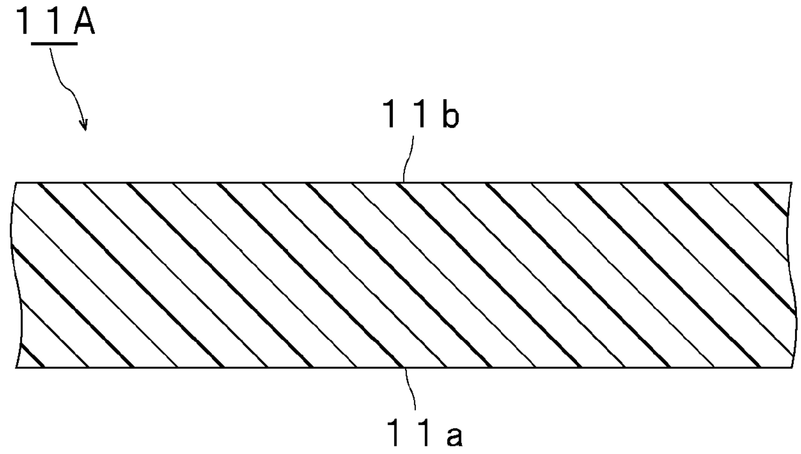


[FIG. 3.]

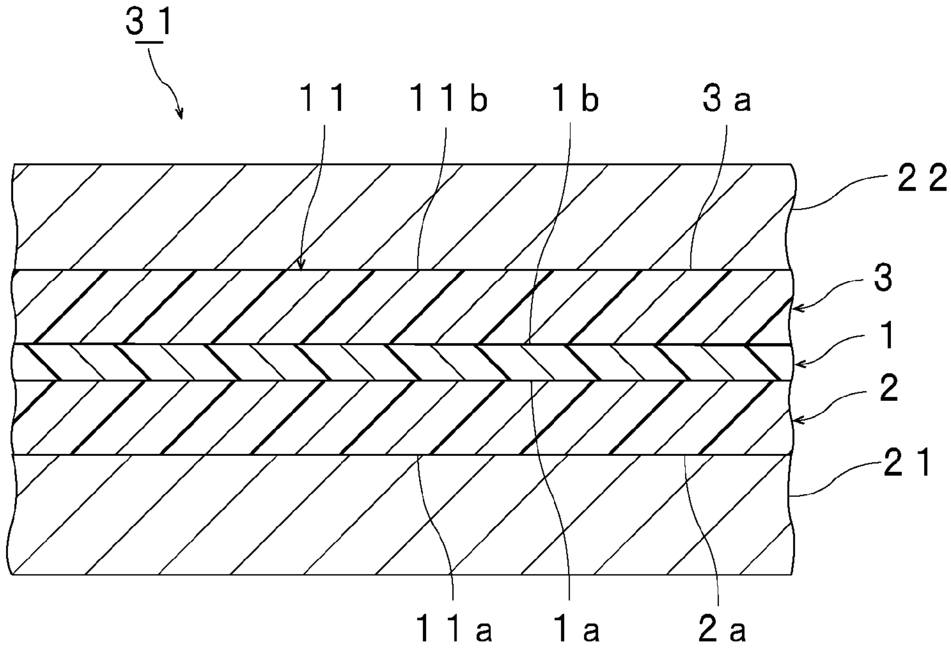

[FIG. 4.]

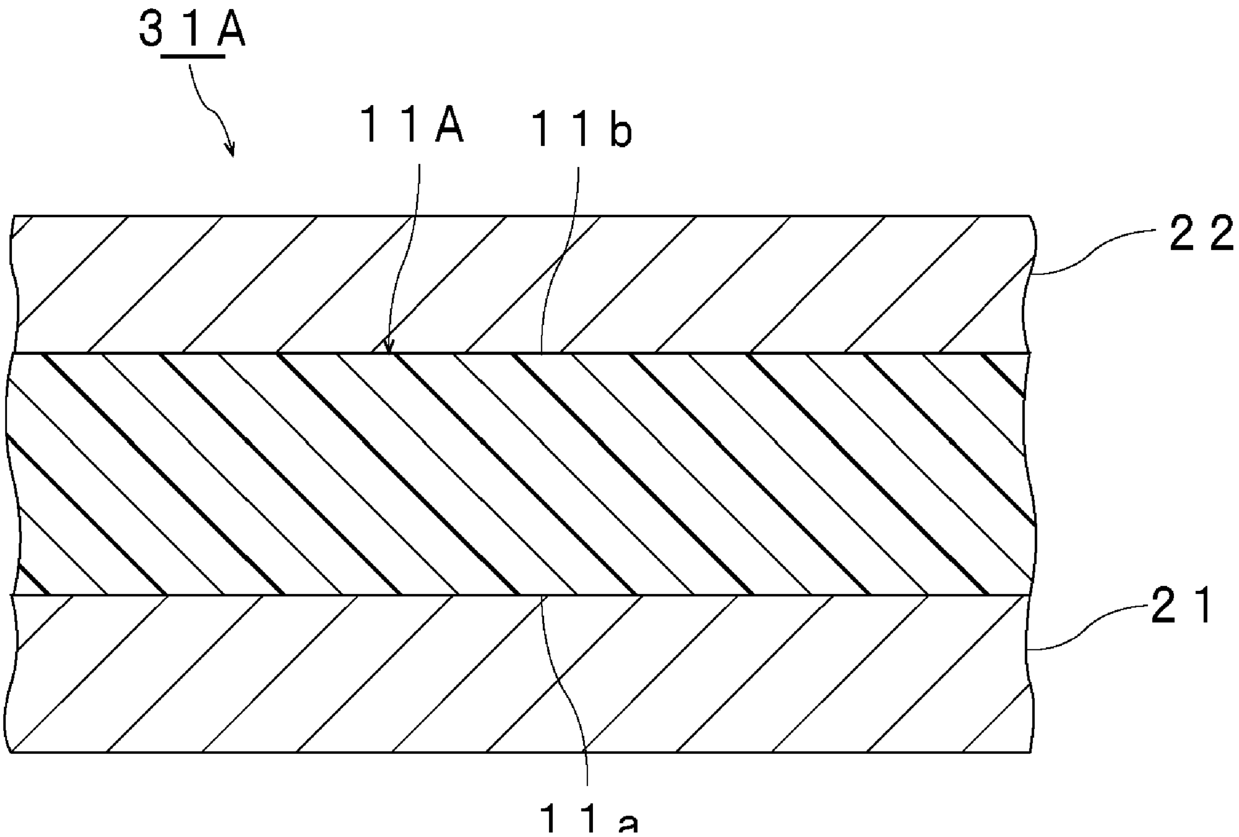

[FIG. 5.]

(a)

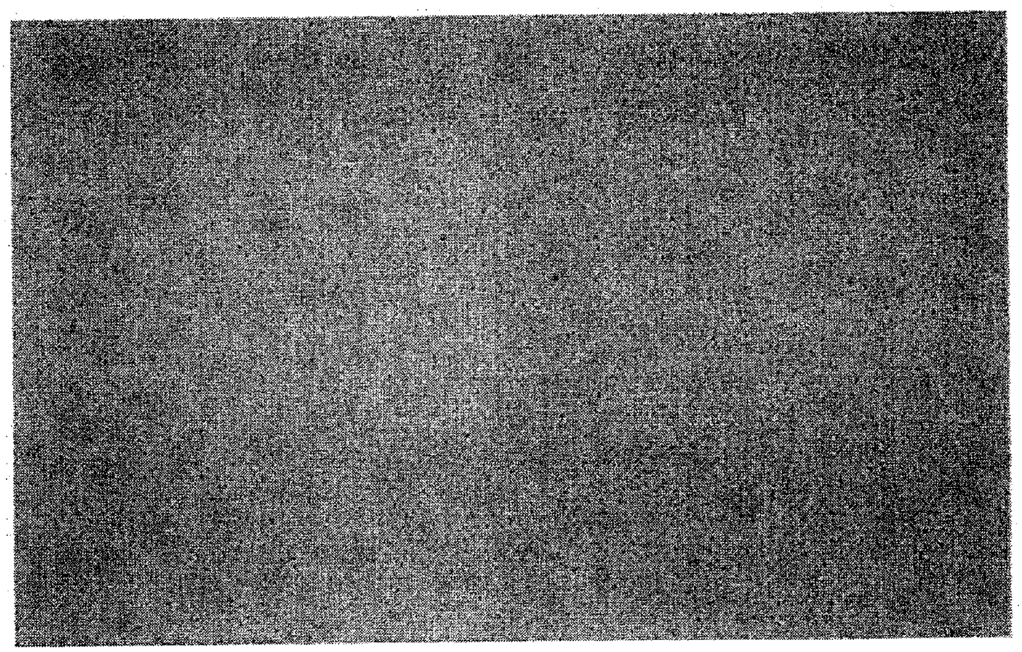

(b)

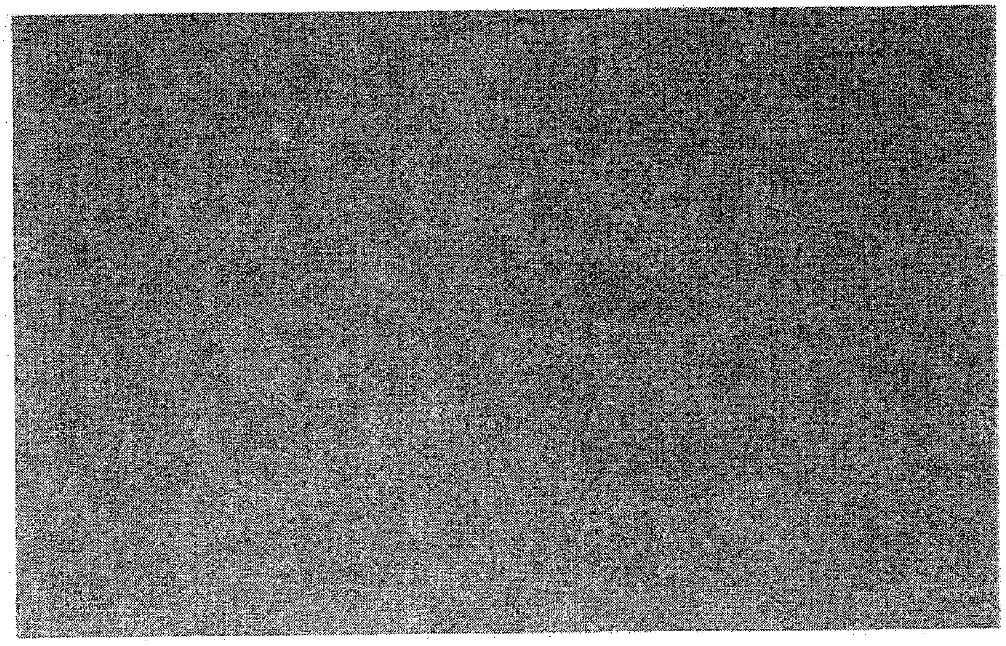

[FIG. 6.]

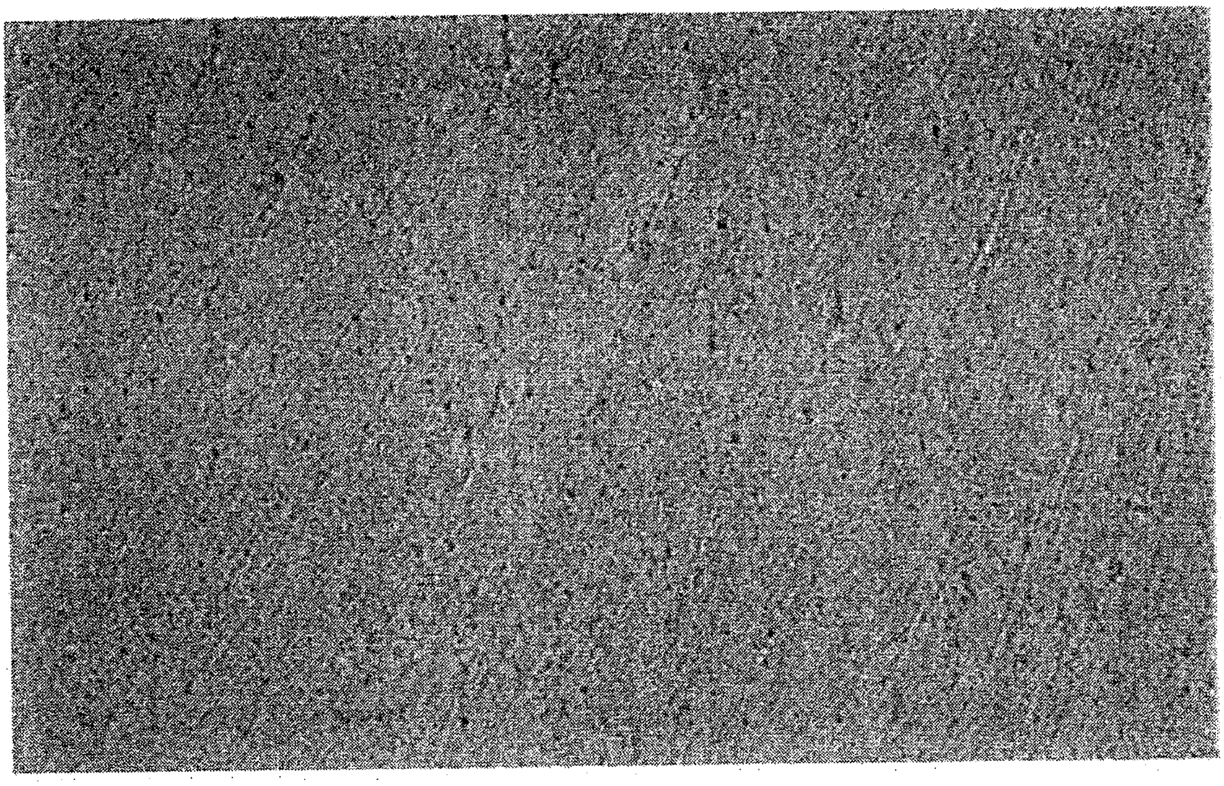

[FIG. 7.]

(a)

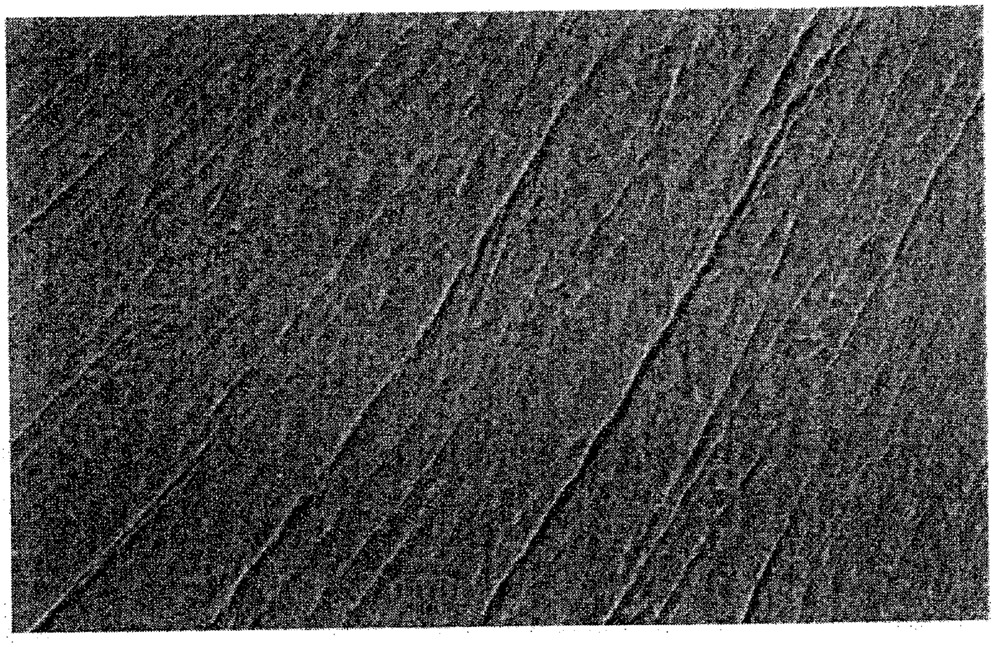

(b)

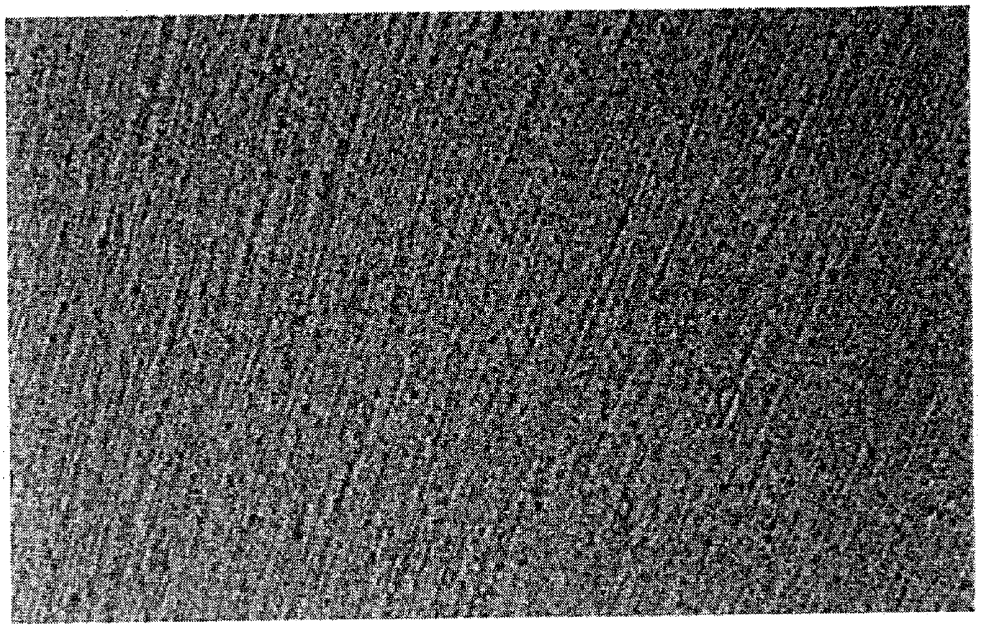

## INTERNATIONAL SEARCH REPORT

International application No.
PCT/JP2019/014425

A. CLASSIFICATION OF SUBJECT MATTER
Int.Cl. C03C27/12(2006.01)i, B32B17/10(2006.01)i, B32B27/20(2006.01)i, B32B27/22(2006.01)i, B60J1/00(2006.01)i

According to International Patent Classification (IPC) or to both national classification and IPC

B. FIELDS SEARCHED
Minimum documentation searched (classification system followed by classification symbols)
Int.Cl. C03C27/12, B32B17/10, B32B27/20, B32B27/22, B60J1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2016/143566 A1 (JXTG NIPPON OIL & ENERGY CORPORATION) 15 September 2016, claims, paragraphs [0028], [0042], example 5 & US 2018/0045957 A1 & EP 3251831 A1 & CN 107517587 A | 1-5, 7-15<br>6 |
| Y | WO 2016/039473 A1 (SEKISUI CHEMICAL CO., LTD.) 17 March 2016, paragraph [0137] & US 2017/0313033 A1 & EP 3192783 A1, paragraph [0136] & TW 201710087 A & KR 10-2017-0057174 A & CN 107074647 A | 6 |
| A | JP 2010-523449 A (KURARAY CO., LTD.) 15 July 2010 & US 2010/0124647 A1 & EP 1977885 A1 & CN 101678649 A | 1-15 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June 2019 (19.06.2019) | 02 July 2019 (02.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/014425

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-156767 A (BASF AG.) 30 May 2003 & US 2003/0031858 A1 & EP 1283436 A2 | 1-15 |
| A | JP 2009-540065 A (SOLUTIA INC.) 19 November 2009 & US 2007/0287786 A1 & EP 2040918 A1 & KR 10-2009-0016571 A & CN 101460303 A | 1-15 |
| A | EP 3156465 A1 (3M INNOVATIVE PROPERTIES COMPANY) 19 April 2017 & US 2018/0298236 A1 & CN 108350328 A | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007143746 A1
- WO 2016039473 A1